# EUROPÄISCHE PATENTSCHRIFT

(11) **EP 0 756 737 B1**
(45) Veröffentlichungstag und Bekanntmachung des Hinweises auf die Patenterteilung: **21.01.1998**
(21) Anmeldenummer: 95915850.2
(22) Anmeldetag: 06.04.1995
(51) Int. Cl.: G08G 1/0967

(54) **SYSTEM ZUR ERFASSUNG VON VERKEHRSINFORMATIONEN IN FAHRZEUGEN**
SYSTEM FOR TRAFFIC INFORMATION ACQUISITION IN VEHICLES
SYSTEME EMBARQUE DE SAISIE D'INFORMATIONS CONCERNANT LE TRAFIC

(30) Priorität: 21.04.1994 DE 4413886
(43) Veröffentlichungstag der Anmeldung: 05.02.1997
(73) Patentinhaber: Leica AG, CH-9435 Heerbrugg (CH)
(72) Erfinder: GEDULD, Georg, Otto, CH-9453 Eichberg (CH)
(74) Vertreter: Stamer, Harald, Dipl.-Phys.
(86) Internationale Anmeldenummer: EP9501253
(87) Internationale Veröffentlichungsnummer: WO9529471

(56) Entgegenhaltungen:
- WO-A-92/22450
- DE-A- 4 138 050
- US-A- 5 062 088

## Beschreibung

Die vorliegende Erfindung betrifft ein System zur Erfassung von Verkehrsinformationen in Fahrzeugen gemäß dem Oberbegriff des Anspruches 1.

Ein solches System ist aus der DE-A-41 38 050 bekannt. Es umfaßt im wesentlichen einen aktiven Sende-Empfänger zum Aussenden eines insbesondere hochfrequenten Abfragesignals sowie zum Empfang und zum Decodieren eines Antwortsignals. Das Abfragesignal wird von einem passiven Sende-Empfänger aufgenommen, in dem dieses Signal codiert wird. Das von dem aktiven Sende-Empfänger empfangene, codierte Signal wird decodiert und für Identifizierungszwecke ausgenutzt.

Bei diesem bekannten System befindet sich der aktive Sende-Empfänger in einem Fahrzeug, während der passive Sende-Empfänger an vorgegebenen Stellen von Verkehrsverläufen vorgesehen ist. Durch Abfragen des passiven Sende-Empfängers können den Verkehr betreffende Informationen abgefragt werden. Beispielsweise kann am Straßenrand ein Verkehrszeichen mit einem passiven Sende-Empfänger vorgesehen sein, der die Information enthält, daß in einem Abstand von 100 Meter eine Geschwindigkeitsbeschränkung von 60 km/h gilt.

Aus der DE-A-41 34 601 sind ein Verfahren und Einrichtungen zur Übergabe von Informationen an den Autofahrer bekannt. Diese Informationen beziehen sich auf die jeweilige Geschwindigkeitsbegrenzung und können zusätzliche Mitteilungen über den Straßenzustand und andere Gefahrenmomente enthalten. Die Mitteilung kann sowohl optisch als auch akustisch erfolgen und je nach Gefahrensituation an Intensität zunehmen. Auch die Möglichkeit eines Eingriffs in den Betrieb des Kraftfahrzeugmotors wird in Betracht gezogen.

Ein System zur Informationsübertragung mittels Infrarotstrahlung mit aufmodulierten Informationsdaten ist aus der DE-A-32 48 544 bekannt. Die Informationsübertragung erfolgt zwischen ortsfesten Baken und beweglichen Fahrzeugen, die jeweils eine Sender-Empfängerkombination aufweisen. Das Fahrzeug weist mindestens zwei unterschiedlich ausgerichtete Sender-Empfängerkombinationen auf. Es sind mindestens zwei an verschiedenen Orten angebrachte Baken vorgesehen, so daß mindestens zwei unterschiedlich ausgerichtete Übertragungsstrecken gebildet werden. Die Sender sind parallel geschaltet und senden gleichzeitig dieselben Daten. Die Empfänger sind ausgangsseitig parallel geschaltet und derart ausgestaltet, daß, wenn Störsignale über einer vorgegebenen Störsignalschwelle liegen, der jeweilige Empfänger gesperrt wird.

In der DE-A-33 19 158 ist ein System zur Übertragung von Informationen zwischen einer Abfragestation und einer Antwortstation mittels optischer Strahlung beschrieben. Von der Abfragestation wird ein Abfragesignal ausgesendet und mit einer Modulation teils in Festfrequenz, teils mit Informationscode beaufschlagt und von der Antwortstation einerseits empfangen und ausgewertet und andererseits als Antwortsignal zurückreflektiert und mit einer Modulation beaufschlagt. Die Freigabe der Rückreflexion des Abfragesignals wird dabei in Abhängigkeit von der Auswertung einer im Abfragesignal enthaltenen Kennung gesteuert Der Zeitpunkt der Freigabe wird durch eine im Abfragesignal enthaltene Codierung gesteuert, die das Ende der gesendeten Nachricht anzeigt. Daraufhin wird zu Beginn der Rückreflexion zunächst ein Bestätigungssignal, beispielsweise eine unveränderte Reflexion der Codierung des Abfragesignals übertragen. Durch dieses Bestätigungssignal wird die Abfragestation automatisch auf Festfrequenz und/oder feste Codierung gesteuert. Damit wird die Antwortbereitschaft erzeugt. In der Antwortstation sind Mittel vorgesehen zur Erkennung der Festfrequenz oder Festcodierung des Abfragesignals und zum Einstellen einer auf diesen Festtakt abgestimmten Betriebsbereitschaft des Modulators der Antwortstation.

In der Druckschrift EP-B-0 312 524 wird ein Verfahren zur Entfernungsmessung zwischen einem Sende-Empfänger für optische Impulssignale und einem Ziel durch Aussenden von optischen Impulssignalen beschrieben, dem das Prinzip der Laufzeitmessung zugrundeliegt. Nach Eintreffen des reflektierten Signals bei dem Sende-Empfänger werden die empfangenen, optischen Signale in digitale, elektrische Signale umgewandelt und anschließend verarbeitet. Als Sender wird ein Halbleiterlaser eingesetzt, mit dem Impulse mit einer Pulsfolgefrequenz im Bereich zwischen ungefähr 10 kHz und etwa 150 kHz auf das Ziel gerichtet werden. Die von dem Ziel reflektierte und empfangene Signalfolge wird mit einer von der Sende Pulsfolgefrequenz abhängigen Abtastfrequenz abgetastet und digitalisiert. Das Abtastintervall wird bei jeder Pulsaussendung erneut gestartet. Die erhaltenen, digitalisierten Abtastwerte innerhalb eines Abtastintervalls werden im Takt der Abtastfrequenz in einen Parallel-Addierer eingelesen und während des ersten Abtastintervalls gespeichert. Die Abtastwerte des unmittelbar nachfolgenden zweiten Abtastintervalls werden im Takt der Abtastfrequenz fortlaufend zu den bereits vorhandenen entsprechenden Abtastwerten hinzuaddiert. Zu jedem Abtastzeitpunkt wird nun statt des jeweils vorherigen Abtastwertes der jeweils erhaltene Summenwert abgespeichert. Die Abtastwerte jedes weiteren Abtastintervalls werden im Takt der Abtastfrequenz fortlaufend zu dem bereits vorhandenen entsprechenden Summenwert aufaddiert. Der zu jedem Abtastzeitpunkt des Abtastintervalls neu erhaltene Summenwert wird statt des vorhergehenden Summenwertes abgespeichert. Aus dem sich ergebenden Summensignal wird nach Aufaddierung von jeweils N Abtastwerten pro Abtastzeitpunkt die Entfernungsinformation abgeleitet. Diesem Verfahren liegt im wesentlichen die Anwendung der Erkenntnis zugrunde, daß die Empfindlichkeit des Meßverfahrens durch die Verwendung von N Impulsen nach den Regeln der Informationstheorie um den Faktor Quadratwurzel aus N verbessert werden kann.

Der Erfindung liegt die Aufgabe zugrunde, ein System der im Oberbegriff des Anspruches 1 genannten Art, derart weiterzubilden, daß zusätzliche Informationen über den Verkehr erhalten werden können. Insbesondere soll dieses System preisgünstig und einfach herzustellen sein.

Diese Aufgabe wird erfindungsgemäß bei einem System der im Oberbegriff des Anspruches 1 genannten Art durch die im Kennzeichen des Anspruches 1 enthaltenen Merkmale gelöst.

Die Erfindung geht von dem Grundgedanken aus, mit Reflexion arbeitende Laufzeit-Abstandsmeßeinrichtungen einzusetzen, um Sende-Empfänger abzufragen, die Verkehrsinformationen gespeichert haben. In den USA ist bereits ein großer Prozentsatz der hergestellten Kraftfahrzeuge mit solchen Abstandsmeßeinrichtungen ausgerüstet.

Weitverbreitete Laufzeit-Abstandsmeßeinrichtungen arbeiten mit optischen Impulssignalen. Bei dem System nach der Erfindung sind daher auch die Sende-Empfänger, in denen die Verkehrsinformation gespeichert ist, optoelektronische Sende-Empfänger, insbesondere sogenannte optoelektrische Transponder. Diese Sende-Empfänger werden im folgenden als ortsfeste Sende-Empfänger bezeichnet.

Es sei angenommen, daß von einem an einem Fahrzeug angebrachten Sende-Empfänger ein optisches Impulssignal ausgesendet wird und auf ein vorausfahrendes Fahrzeug sowie einen am Straßenrand aufgestellten ortsfesten Sende-Empfänger auftrifft. Das von dem vorausfahrenden Fahrzeug reflektierte, optische Impulssignal kehrt nach einer bestimmten Zeitdauer zu dem fahrzeugseitigen Sende-Empfänger zurück. Die Zeitdauer hängt im wesentlichen von dem Abstand zwischen dem sendenden und dem vorausfahrenden Fahrzeug ab. Einflüsse einer Relativgeschwindigkeit zwischen den zwei Fahrzeugen auf das Abstandsmeßergebnis sind von untergeordneter Bedeutung.

Das von dem fahrzeugseitigen Sende-Empfänger gesendete optische Impulssignal zur Abstandsmessung ist auch auf den ortsfesten Sende-Empfänger aufgetroffen und wird von diesem empfangen und codiert und als eine codierte optische Impulssignalfolge ausgesendet und von dem fahrzeugseitigen Sende-Empfänger aufgenommen. Wenn der Abstand zwischen dem sendenden Fahrzeug und dem ortsfesten Sende-Empfänger geringer als die Entfernung zu dem vorausfahrenden Fahrzeug ist, trifft das von dem ortsfesten Sende-Empfänger zurückgesendete optische Impulsfolgesignal vor dem Signal ein, das von dem vorausfahrenden Fahrzeug reflektiert worden ist. Infolgedessen würde der Abstand zwischen dem sendenden Fahrzeug und dem ortsfesten Sende-Empfänger als der Abstand zu dem vorausfahrenden Fahrzeug interpretiert. Man würde also eine falsche Abstandsmessung erhalten.

Erfindungsgemäß ist, um die Gefahr einer solchen fehlerhaften Abstandsmessung zu vermeiden, vorgesehen, daß der ortsfeste Sende-Empfänger seine codierte, optische Impulssignalfolge erst nach Ablauf einer vorbestimmten Verzögerungszeit aussendet Diese Verzögerungszeit sollte so groß sein, daß eine durchgeführte Abstandsmessung zuverlässig abgeschlossen ist, bevor der ortsfeste Sende-Empfänger sein codiertes, optisches Impulssignal aussendet. Dies bedeutet auch, daß die Verzögerungszeit von der Leistungsfähigkeit der Laufzeit-Abstandsmeßeinrichtung abhängt, das heißt welche maximalen Abstände in welcher Zeit gemessen werden können.

Vorteilhafte Weiterbildungen des Erfindungsgegenstandes sind in den Unteransprüchen angegeben.

Gemäß einer vorteilhaften Weiterbildung der Erfindung wird für die optischen Impulssignale Infrarotlicht verwendet. Entsprechend einer anderen vorteilhaften Weiterbildung der Erfindung ist der zweite Sende-Empfänger ein optoelektrischer, vorzugsweise passiver, Transponder.

Gemäß einer weiteren vorteilhaften Ausgestaltung der Erfindung ist der zweite Sende-Empfänger an einem Verkehrsschild angebracht.

Eine vorteilhafte Weiterbildung der Erfindung zeichnet sich dadurch aus, daß das von dem ersten Sende-Empfänger ausgesendete erste Signal codiert ist und in dem zweiten Sende-Empfänger decodiert wird, und daß das codierte, zweite Signal von dem zweiten Sende-Empfänger in Abhängigkeit von dem Code des codierten, ersten Signals ausgesendet wird. Der Code des codierten, ersten Signals kann ein für eine bestimmte Fahrzeugart spezifischer Code ist.

Wenn beispielsweise der fahrzeugseitige Sende-Empfänger an einem Lastwagen angebracht ist, so kann das von diesem Sende-Empfänger ausgesendete Signal eine Codierung aufweisen, der "Lastwagen" zugeordnet ist. Ein Verkehrszeichen, das nur eine Lastwagen betreffende Information enthält, beispielsweise eine bei Gefälle nur für Lastwagen geltende Geschwindigkeitsbeschränkung, kann einen Sende-Empfänger aufweisen, der eine innere Codierung "Lastwagen" besitzt. Wenn dieser Sende-Empfänger das "Lastwagen" codierte Signal erhält, sendet er, weil eine Zuordnung der Code vorliegt, ein Informationssignal aus, das von dem ersten Sende-Empfänger empfangen wird. Wenn von dem fahrzeugseitigen Sende-Empfänger ein Signal ausgesendet wird, das keinen Code "Lastwagen" aufweist, wird von dem zweiten Sende-Empfänger auch kein optische Informationssignal abgegeben.

Die von einem zweiten bzw. ortsfesten Sende-Empfänger erhaltenen Informationen werden zweckmäßigerweise für den Fahrzeugfahrer erkennbar auf einer Sichtanzeige angezeigt werden. Andere Anzeigearten, wie beispielsweise eine Sprachanzeige, sind ebenfalls möglich. Es ist auch möglich, wie es bekannt ist, von dem Signal, das von dem fahrzeugseitigen Sende-Empfänger empfangen worden ist, ein Steuersignal abzuleiten, mit dem in die Betriebsweise des Kraftfahrzeugmotors eingegriffen werden kann.

Der Erfindungsgegenstand wird im folgenden anhand von Ausführungsbeispielen unter Bezugnahme auf die Zeichnungen näher erläutert. Es zeigt:
- Fig. 1: eine Straßenverkehrssituation mit zwei Personenwagen und einem mit einem Sende-Empfänger ausgerüsteten Verkehrszeichen für eine Geschwindigkeitsbegrenzung,
- Fig. 2: das in Fig. 1 dargestellte Verkehrszeichen im größeren Maßstab,
- Fig. 3: eine schematische Schnittansicht durch das Straßenverkehrszeichen im Bereich des an dem Verkehrszeichen angebrachten Sende-Empfängers, und
- Fig. 4: eine schematische, graphische Darstellung der von dem kraftfahrzeugseitigen Sende-Empfänger bei derin Fig. 1 gezeigten Straßenverkehrssituation durchgeführten Abstandsmessung empfangenen Signale.

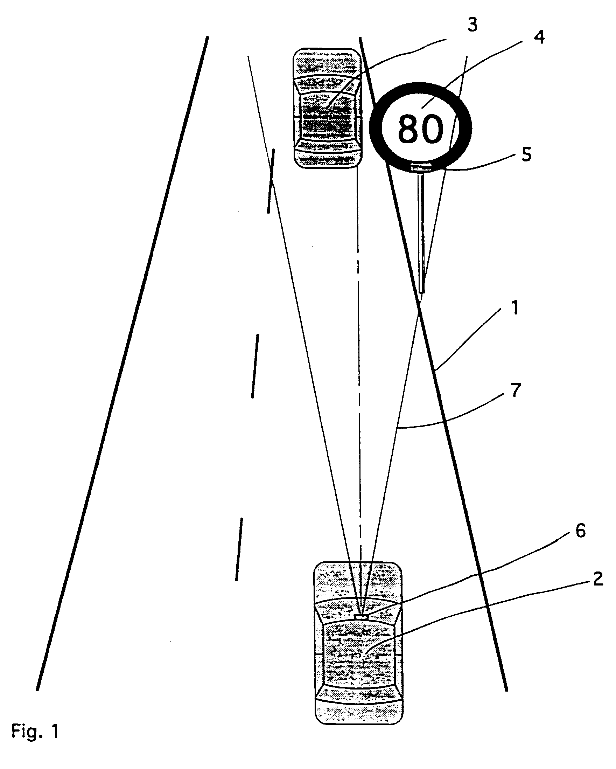

Fig. 1 zeigt eine Straßenverkehrssituation, bei der sich auf der rechten Fahrbahn einer Straße 1 ein erster Personenwagen 2 befindet Dem ersten Personenwagen 2 fährt ein zweiter Personenwagen 3 auf derselben Fahrbahn voraus. Auf der rechten Seite der Straße 1 ist ein Verkehrszeichen 4 errichtet, das eine Geschwindigkeitsbegrenzung auf 80 km/h angibt. Das Verkehrszeichen 4 befindet sich auf der Höhe zwischen dem ersten Personenwagen 2 und dem zweiten Personenwagen 3.

Der zweite Personenwagen 2 ist mit einem Sende-Empfänger 6 ausgerüstet, der als eine Abstandsmeßeinrichtung ausgebildet ist. Die Abstandsmessung erfolgt über eine Laufzeitmessung, wobei die Zeit bestimmt wird, die zwischen dem Aussenden eines Meßsignals und dem Empfang eines an einem Ziel reflektierten Signals gemessen wird. Von der hier verwendeten Abstandsmeßeinrichtung 6 wird ein optisches Impulssignal ausgesendet. Der Meßstrahl hat eine Reichweite von etwa 200 m und einen Öffnungswinkel von 3°.

An dem Verkehrszeichen 4 ist ein Sende-Empfänger 5 angebracht, der vorzugsweise ein optoelektrischer Transponder ist. Wenn dieser mit einem Abfragesignal beaufschlagt wird, sendet er ein mit einer Codierung versehenes Antwortsignal aus. Im allgemeinen ist die in dem Abfragesignal enthaltene Energie ausreichend, um das Antwortsignal zu erzeugen. Gegebenenfalls ist es möglich, den Transponder 5 mit einer Batterie, insbesondere einer Fotozelle auszurüsten, deren erzeugte elektrische Energie in einem Speicher, beispielsweise einem Kondensator, gespeichert wird.

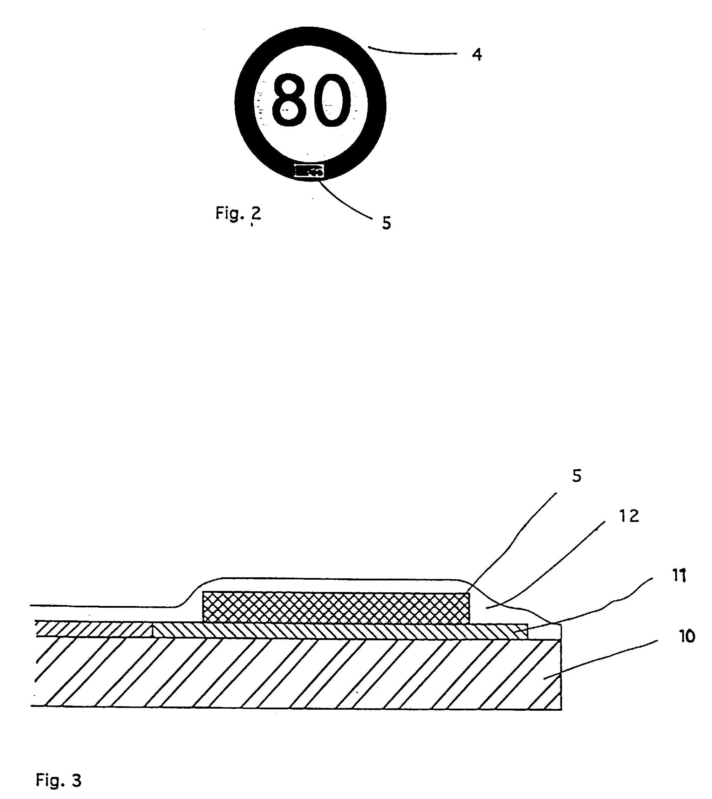

Fig. 3 zeigt eine schematische Schnittdarstellung durch den Randbereich des in Fig. 2 gezeigten Verkehrszeichens 4, in dem sich der optoelektrische Transponder 5 befindet.

Gemäß Fig. 3 ist auf einem Metallträger 10 eine farbige Beschichtung oder Folie 11 aufgebracht, die an dieser Stelle entsprechend der roten Umfangsbegrenzung des Verkehrszeichens 4 rot gefärbt ist. Auf der Beschichtung 11 ist der optoelektronische Transponder 5 angebracht.

Zum Schutz kann das gesamte Verkehrszeichen oder auch nur der Bereich, wo sich der optoelektrische Transponder 5 befindet, mit einer transparenten Schutzfolie 12 überzogen sein. Im Bereich des optoelektrischen Transponders 5 muß die Schutzfolie 12 für den Wellenlängenbereich der verwendeten optischen Impulssignale durchlässig sein.

Wenn nun von dem zweiten Fahrzeug 2 aus eine Abstandsmessung durchgeführt werden soll, wird von dem fahrzeugseitigen Sende-Empfänger 6 ein optisches Impulssignal 7 ausgesendet. Dieses Impulssignal weist, wie bereits erwähnt, einen Öffnungswinkel von etwa 3° auf und erfaßt, wie es in Fig. 1 gezeigt ist, in der Feme einerseits den vorausfahrenden zweiten Personenwagen 3 und andererseits das Verkehrsschild 4, insbesondere den Bereich des optoelektrischen Transponders 5. In der Nähe wird jedoch nur das vorausfahrende Fahrzeug erfaßt, so daß der Transponder 5 nicht mehr zum Aussenden seines Informationssignals veranlaßt wird. Die Energie der optischen Impulssignale 7 und der Öffnungswinkel des Signalstrahles bestimmen den Distanzbereich, in dem einerseits der Transponder 5 angetriggert werden kann und aus dem andererseits auch nur Informationssignale von dem Sende-Empfänger 6 empfangen werden können. Das gilt erkennbar auch für nachfolgende Fahrzeuge, so daß deren Abstandsmessung zum vorausfahrenden Fahrzeug nicht durch Informationssignale gestört werden kann, die vom vorausfahrenden Fahrzeug ausgelöst wurden.

Mit dem Aussenden des Meßsignals wird in dem fahrzeugseitigen Sende-Empfänger 6 beispielsweise ein Zähler freigegeben, der beginnt, Taktsignale zu zählen. Das von dem Sende-Empfänger 6 ausgesendete optische Impulssignal 7 wird von dem vorausfahrenden zweiten Personenwagen 3 reflektiert und das reflektierte Signal wird von dem Sende-Empfänger 6 des ersten Personenwagens 2 empfangen. Dieses empfangene Signal unterbricht das Zählen der Taktimpulse durch den Zähler. Somit ist der gezählte Zählwert eine Größe, aus der der Abstand zwischen den beiden Personenwagen berechnet werden kann.

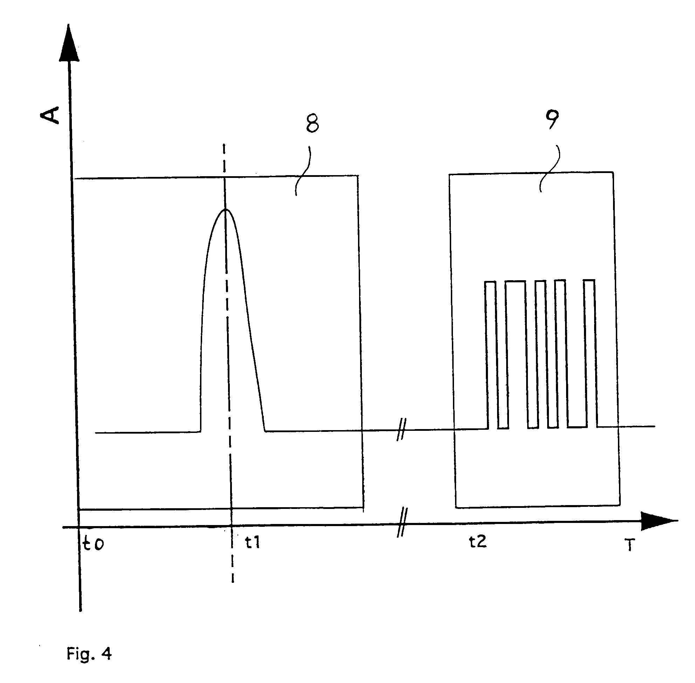

In Fig. 4 ist schematisch ein Zeitdiagramm für die von dem Empfangsteil des Sende-Empfängers 6 des zweiten Personenwagens 2 erhaltenen Signale dargestellt. Auf der Abszissenachse ist die Zeit und auf der Ordinatenachse die Impulsamplitude A abgetragen. Das zur Zeit t 0 ausgesendete optische Impulssignal wird als reflektiertes Signal zu einer Zeit t1 empfangen. Bleiben eine etwaige Gerätekonstante und Relativgeschwindigkeit zwischen den beiden Personenwagen unberücksichtigt, so ist die Zeit t1 direkt proportional zu dem Abstand zwischen dem ersten Personenwagen 2 und dem zweiten Personenwagen 3.

Mit dem zur Abstandsmessung ausgesendeten optischen Impulssignal wurde auch der optoelektrische Transponder 5, der an dem Verkehrszeichen 4 angebracht ist, beaufschlagt. Der optoelektrische Transponder 5 ist in besonderer Weise derart ausgebildet, daß zwischen dem Empfang eines optischen Impulssignals zur Abfrage der in dem Transponder enthaltenen Information und dem Aussenden des optischen Impulssignals, das entsprechend dieser Information codiert ist, eine vorgegebene Verzögerungszeit vorgesehen ist, um eine fehlerhafte Abstandsmessung zu vermeiden.

In Fig. 4 ist zu erkennen, daß dieses codierte, optische Impulssignal von dem Transponder 5 erst nach Ablauf der Verzögerungszeit t2 von dem fahrzeugseitigen Sende-Empfänger 6 empfangen worden ist. Zu dieser Zeit t2 ist die Abstandsmessung in dem durch das Distanz-Meßfenster 8 vorgegebenen Zeitintervall mit Sicherheit bereits abgeschlossen worden. Die Unterbrechungsstriche in der Signaldarstellung und auf der Zeitachse sollen den tatsächlichen Zeitabstand zu dem für das Informations-Meßfenster 9 vorgesehenen Zeitintervall deutlich machen.

Ohne eine solche Verzögerungszeit besteht die Gefahr, daß eine fehlerhafte Abstandsmessung durchgeführt wird. Das optische Impulssignal für die Abstandsmessung ist auch gleichzeitig das Signal zum Abfragen des optoelektrischen Transponders. Wenn bei der in Fig. 1 gezeigten Verkehrssituation das zweite Fahrzeug 3 relativ weit entfernt ist, während der Abstand zu dem Verkehrszeichen 4 wesentlich geringer ist, so kann die Situation eintreten, daß das von dem optoelektrischen Transponder 5 ausgesendete optische Impulssignal zu einem früheren Zeitpunkt von dem Empfangsteil des Sende-Empfängers 6 des ersten Personenwagens 2 als das von dem zweiten Personenwagen 3 reflektiertes Signal empfangen wird. Daher besteht die Gefahr, daß dieses Signal als von dem zweiten Personenwagen 3 reflektiertes Signal interpretiert wird. Infolgedessen erhielte man für den zweiten Personenwagen 3 eine fehlerhafte Abstandsmessung.

Die bei dem cptoelektrischen Transponder 5 vorgesehene Verzögerungszeit ist daher größer als die maximale Zeitdauer, die für eine Abstandsmessung benötigt wird. In einem praktischen Fall werden für eine Abstandsmessung bis z.B. 200 m etwa 2 µsec benötigt. Wenn mit einer Taktfrequenz von 50 µsec optische Impulssignale ausgesendet werden, so würden etwa 48 µsec für das Abfragen des optoelektrischen Transponders 5 zur Verfügung stehen, in denen das Empfangsteil üblicherweise abgeschaltet ist. Wird die Verzögerungszeit auf etwa 20 µsec festgelegt, so ist eine Kollision mit aus einer Abstandsmessung erhaltenen Daten ausgeschlossen. Bei einem Öffnungswinkel des Impulssignals 7 von 3° wird auch sichergestellt, daß ein auf einem Verkehrsschild in 200 m Entfernung angebrachter Transponder von dem Impulssignal 7 erreicht wird. Da der Transponder 5 in Blickrichtung zum Fahrzeug montiert ist, ergibt sich auch eine direkte Zuordnung zur Fahrtrichtung und somit eine geringe Störempfindlichkeit.

Zweckmäßigerweise befindet sich in dem Fahrzeug, das mit einem Sende-Empfänger sowohl zur Abstandsmessung als auch zur Abfrage von ortsfesten Sende-Empfängem in bezug auf Verkehrsinformationen ausgerüstet ist, eine Einrichtung zur akustischen oder visuellen Angabe der erhaltenen Informationen und Meßergebnisse. Eine visuelle Anzeige kann mittels einer Anzeigeeinrichtung mit Flüssigkristallen erfolgen. Eine akustische Anzeige könnte mit Hilfe von synthetischer Sprache durchgeführt werden.

Die Genauigkeit der Abstandsmessung kann erhöht werden, wenn eine Vielzahl von Abstandsmessungen durchgeführt wird. Es ist von Vorteil, hierfür das Abstandsmeßverfahren zu verwenden, das in EP-B- 0 312 524 beschrieben ist. Diese Druckschrift wurde bereits in der Einleitung genannt.

## Patentansprüche

1. System zur Erfassung von Verkehrsinformationen in Fahrzeugen mit einem ersten, fahrzeugseitig vorgesehenen Sende-Empfänger und einem zweiten, an vorgegebenen Stellen von Verkehrsläufen vorgesehenen Sende-Empfänger, wobei der erste Sende-Empfänger ein erstes Signal aussendet sowie ein zweites Signal von dem zweiten Sende-Empfänger empfängt und decodiert, und der zweite Sende-Empfänger das erste Signal von dem ersten Sende-Empfänger empfängt und das zweite Signal codiert zu dem ersten Sende-Empfänger zurücksendet,
**dadurch gekennzeichnet,** daß
- der erste und der zweite Sende-Empfänger (6, 5) als optoelektrische Sende-Empfänger ausgebildet sind, mit denen optische Impulssignale als erstes und zweites Signal aussendbar bzw. empfangbar sind,
- der erste Sende-Empfänger (6) als eine mit Reflexion arbeitende Laufzeit-Abstandsmeßeinrichtung zu Hindernissen vor dem Fahrzeug ausgebildet ist,
- das für eine Abstandsmessung von dem ersten Sende-Empfänger (6) ausgesendete Signal auch das von dem zweiten Sende-Empfänger (5) empfangene erste Signal ist,
- das zweite Signal von dem zweiten Sende-Empfänger (5) nach einer vorgegebenen Verzögerungszeit (t2) nach Empfang des ersten Signals aussendbar ist, und diese vorgegebene Verzögerungszeit (t2) größer als die maximal zu erwartende Zeitdauer für eine Abstandsmessung ist.

2. System nach Anspruch 1, **dadurch gekennzeichnet**, daß die optischen Impulssignale Infrarotsignale sind.

3. System nach Anspruch 1, **dadurch gekennzeichnet,** daß der zweite Sende-Empfänger (5) an einem Verkehrsschild (4) angeordnet ist.

4. System nach Anspruch 1 oder 3, **dadurch gekennzeichnet,** daß der zweite Sende-Empfänger ein optoelektrischer Transponder (5) ist.

5. System nach einem der vorhergehenden Ansprüche, **dadurch gekennzeichnet,** daß das von dem ersten Sende-Empfänger ausgesendete erste Signal codiert ist und in dem zweiten Sende-Empfänger (5) decodierbar ist, und daß das codierte, zweite Signal von dem zweiten Sende-Empfänger (5) in Abhängigkeit von dem Code des codierten, ersten Signals ausgesendet wird.

6. System nach Anspruch 5, **dadurch gekennzeichnet,** daß der Code des codierten, ersten Signals ein für ein Fahrzeug spezifischer Code ist.

7. System nach einem der vorhergehenden Ansprüche, **dadurch gekennzeichnet,** daß in dem Fahrzeug (2) eine akustische und/oder visuelle Anzeigeeinrichtung zur Angabe der Ergebnisse der Abstandsmessung und/oder der in dem codierten, zweiten Signal enthaltenen Information vorgesehen ist.

## Claims

1. System for detection of items of traffic information in vehicles with a first transmitter-receiver provided at the vehicle and a second transmitter-receiver provided at predetermined locations of the traffic circulation, wherein the first transmitter-receiver transmits a first signal as well as receives and decodes a second signal from the second transmitter-receiver, and the second transmitter-receiver receives the first signal from the first transmitter-receiver and sends back the second signal coded to the first transmitter-receiver, characterised thereby that
- the first and the second transmitter-receiver (6, 5) are constructed as optoelectrical transmitters-receivers, by which pulse signals are transmissable and receivable as first and second signal,
- the first transmitter-receiver (6) is constructed as a transmit time / distance measuring device, which operates by reflection, relative to barriers in front of the vehicle,
- the signal, which is transmitted by the first transmitter-receiver (6) for a distance measurement, is also the first signal received by the second transmitter-receiver (5),
- the second signal is transmissible by the second transmitter-receiver (5) after a predetermined delay time (t2) after reception of the first signal, and this predetermined delay time (t2) is greater than the maximum expected time period for a distance measurement.

2. System according to claim 1, characterised thereby that the optical pulse signals are infrared signals.

3. System according to claim 1, characterised thereby that the second transmitter-receiver (5) is arranged at a traffic sign (4).

4. System according to claim 1 or 3, characterised thereby that the second transmitter-receiver is an optoelectrical transponder (5).

5. System according to one of the preceding claims, characterised thereby that the first signal transmitted by the first transmitter-receiver is coded and can be decoded in the second transmitter-receiver (5), and that the coded second signal is transmitted by the second transmitter-receiver (5) in dependence on the code of the coded first signal.

6. System according to claim 5, characterised thereby that the code of the code first signal is a code specific for a vehicle.

7. System according to one of the preceding claims, characterised thereby that an acoustic and/or visual indicator device for indication of the results of the distance measurement and/or of the information contained in the coded second signal is provided in the vehicle (2).

## Revendications

1. Système pour la saisie d'informations concernant le trafic dans des véhicules avec un premier émetteur-récepteur prévu côté véhicule et un second émetteur-récepteur prévu en des points prédéterminés du cours du trafic, où le premier émetteur-récepteur émet un premier signal et reçoit un second signal du second émetteur-récepteur et le décode et le second émetteur-récepteur reçoit le premier signal du premier émetteur-récepteur et renvoie le signal codé au premier émetteur-récepteur,
caractérisé en ce que :
le premier et le second émetteurs-récepteurs (6, 5) sont configurés en tant qu'émetteurs-récepteurs opto-électriques, dans lesquels des signaux impulsionnels optiques sont émis ou respectivement reçus en tant que premier et second signal,
le premier émetteur-récepteur (6) est configuré comme un dispositif de mesure de la distance - temps de parcours fonctionnant avec réflexion par rapport aux obstacles devant le véhicule,
le signal émis pour la mesure de la distance par le premier émetteur-récepteur (6) est également le premier signal reçu par le second émetteur-récepteur (5),
le second signal est émis par le second émetteur-récepteur (5) après un temps prédéterminé d'attente (t2) après réception du premier signal et ce temps prédéterminé d'attente (t2) est plus grand que la durée maximale attendue pour une mesure de distance.

2. Système selon la revendication 1, caractérisé en ce que les signaux impulsionnels optiques sont des signaux infrarouges.

3. Système selon la revendication 1, caractérisé en ce que le second émetteur-récepteur (5) est agencé sur une signalisation routière (4).

4. Système selon la revendication 1 ou 3, caractérisé en ce que le second émetteur-récepteur est un transpondeur opto-électrique (5).

5. Système selon l'une quelconque des revendications précédentes, caractérisé en ce que le premier signal émis par le premier émetteur-récepteur est codé et peut être décodé dans le second émetteur-récepteur (5), en ce que le second signal codé est émis par le second émetteur-récepteur (5) en dépendance du code du premier signal codé.

6. Système selon la revendication (5), caractérisé en ce que le code du premier signal codé est un code spécifique au véhicule.

7. Système selon l'une quelconque des revendications précédentes, caractérisé en ce que dans le véhicule (2) est prévu un dispositif acoustique et/ou visuel d'indication pour l'indication du résultat de la mesure de la distance et/ou de l'information contenue dans le second signal codé.
